# EUROPEAN PATENT SPECIFICATION

(11) **EP 4 159 052 B1**
(45) Date of publication and mention of the grant of the patent: **31.07.2024**
(21) Application number: 21812395.8
(22) Date of filing: 28.05.2021
(51) Int. Cl.: A23P 20/20, A23P 30/25

(54) **FORMING METHOD AND FORMING DEVICE FOR FOOD**
FORMVERFAHREN UND FORMVORRICHTUNG FÜR LEBENSMITTEL
PROCÉDÉ ET DISPOSITIF DE FORMATION POUR ALIMENT

(30) Priority: 29.05.2020 JP 2020093987
(43) Date of publication of application: 05.04.2023
(73) Proprietor: Rheon Automatic Machinery Co., Ltd., Utsunomiya-shi, Tochigi 320-0071 (JP)
(72) Inventor: SHINOMIYA Yoshinori, Utsunomiya-shi, Tochigi 320-0071 (JP)
(74) Representative: Huebner, Stefan Rolf
(86) International application number: PCT/JP2021/020349
(87) International publication number: WO 2021/241724

(56) References cited:
- EP-A1- 0 601 194
- WO-A1-2016/133034
- JP-A- 2004 208 524
- JP-A- 2008 178 391
- JP-A- 2011 010 567
- JP-A- 2011 010 567
- JP-A- 2017 038 579
- JP-A- H08 112 056
- JP-A- H08 112 056

## Description

### TECHNICAL FIELD

The present invention relates to a method and a device for forming a food product, and more specifically, to a method and a device for easily forming a food product having a good appearance and a good shape in response to a change in a weight of the food product, when a bar-like food item is cut to form the food product, or when a periphery of a thin-piece outer material is sealed above an inner material after the inner material has been disposed on an upper surface of the thin-piece outer material to form the food product.

### BACKGROUND ART

A device and a method for cutting a bar-like food item to form a food product have been variously suggested. A method disclosed in the Patent Publication 1 indicated below is a method for encrusting a multi-layer food product by cutting it so that an encrusting condition of its outer skin material is adjusted. When such a multi-layer bar-like food item is cut to be encrusted, a narrowing speed and a narrowing start timing of a cutting and forming gate surrounded by a cutter body rotatably provided in a cutting mechanism are adjusted by controlling a rotation of the cutter body. A relative speed between an extruding speed of the multi-layer bar-like food item and a lowering speed of the cutting and forming gate is adjusted by controlling a vertical-movement speed and a vertical-movement timing of the cutting mechanism.

A device disclosed in the Patent Publication 2 indicated below includes a shutter vertical-movement motor, a shutter opening/closing motor, a receiving member vertical-movement motor, and a motor control unit for controlling these motors, and encrusts an encrusted food product by cutting it, which food product always has the same appearance and the same shape by controlling a rotation of the shutter opening/closing motor so that a closing end position of a shutter is allowed to be always the same even if a closing start position or a closing operation speed of the shutter is changed.

A device disclosed in the Patent Publication 3 indicated below includes a control device for controlling a raising speed and a lowering speed of a receiving member supporting an encrusted food product from its lower side, and encrusts an encrusted food product by cutting it so that a contacting state between a lower surface of a shutter and an upper part of the encrusted food material is controlled and an amount of an outer material lead to a top side of the encrusted food product is controlled.

A device for forming a food product by sealing a periphery of a thin-piece outer material above an inner material after the inner material has been disposed on an upper surface of the thin-piece outer material is described, for example, in the Patent Publication 4 indicated below.

### PRIOR ART PUBLICATION

Patent Publication 1: Japanese Patent Laid-open Publication No. 08-112056
Patent Publication 2: Japanese Patent Laid-open Publication No. 2011-010567
Patent Publication 3: Japanese Patent Laid-open Publication No. 2004-208524
Patent Publication 4: International Publication No. WO 2016/133034

### SUMMARY OF THE INVENTION

### PROBLEM TO BE SOLVED BY THE INVENTION

When a bar-like food item is cut to form a food product, or when a periphery of a thin-piece outer material is sealed above an inner material after the inner material has been disposed on an upper surface of the thin-piece outer material to form a food product, a vertical position of a support member with respect to a shutter device is an important element for an appearance and a good shape of the food product, which support member supports the food product from its lower side below the shutter device (and corresponds to a conveyor of the Patent Publication 1, and the receiving member of the Patent Publication 2). For example, when the shutter device performs a cutting operation while it vertically moves with respect to the bar-like food item flowing downwardly from a supply device, the support member vertically moves in synchronization with the vertical-movement of the shutter device to fix an appearance and a good shape of the food product. Thus, when a weight of the food product is changed, it is necessary to change an uppermost position of the support member accordingly.

However, in the devices disclosed in the Patent Publications 1 and 2, the vertical position of the support member is manually changed by checking the food product while it is being cut, so that working efficiency is poor. Further, when it is necessary to change an operation pattern of the support member according to a property of the food product, replacement of a vertical-movement cam is required.

The device of the Patent Publication 3 includes a control actuator for vertically moving a support member (corresponding to the receiving member of the Patent Publication 3), and controls its vertical-movement speed, but it is not considered that a setting operation of a vertical position of the support member is automatically changed in response to a larger or smaller weight of the food product. Again, when the weight of the food product is changed, the vertical position of the support member is changed by an operator by checking the food product.

To solve the above-stated problem, an object of the present invention is to provide a method and a device for easily forming a food product having a good appearance and a good shape in response to a change in a weight of the food product, when a bar-like food item is cut to form the food product, or when a periphery of a thin-piece outer material is sealed above an inner material after the inner material has been disposed on an upper surface of the thin-piece outer material to form the food product, so that a burden on an operator can be decreased and a production efficiency can be enhanced.

### MEANS FOR SOLVING THE PROBLEM

The present disclosure not encompassed by the wordings of the claims is directed to a device for forming a bar-like food item into a food product, which device includes a shutter device which is vertically movable and has a plurality of shutter pieces capable of opening and closing for cutting the bar-like food item; a support device which includes a support member capable of vertically moving for supporting the food product from its lower side; and a control device which controls the operations of the shutter device and the support device, wherein the control device includes an input unit for inputting an input parameter, and a calculation

unit for calculating an uppermost position of the support member in the vertical direction based on the input parameter.

The input parameter set at the input unit may be a value based on a target weight of the food product.

The control device may further include a storage unit for storing an initial setting parameter, and the calculation unit may calculate the uppermost position of the support member in the vertical direction based on the initial setting parameter selected at the input unit and the input parameter set at the input unit.

The initial setting parameter may include a vertical-movement model pattern of the support member and a type of the shutter piece.

The storage unit may store a maximum vertical stroke of the support member as the initial setting parameter, and the calculation unit may be configured to use the maximum vertical stroke as a threshold, calculate a lowermost position of the support member as a lowest vertical-movement position when the uppermost position does not exceed the threshold, and calculate the lowermost position as a position lowered from the uppermost position by the maximum vertical stroke when the uppermost position exceeds the threshold.

The calculation unit may be configured to calculate the vertical-movement pattern of the support member based on the vertical-movement model pattern, the uppermost position, and the lowermost position.

The control device may include an operation control unit for controlling operations of the shutter device and the support device based on a calculation result of the calculation unit.

The control device may include a memory unit which can store the initial setting parameter, the input parameter, and the calculation result as one memory group, and can read out the stored memory group.

The forming device may include a bar-like food item supply device which includes an inner material supply device, an outer material supply device, and a combining nozzle.

In the control device, a target weight of the food product is input into the input unit, a supply amount of the bar-like food item supply device is calculated by the calculation unit, and when an actual weight of the food product is input into the input unit, the supply amount is calculated to be changed in response to a difference between the target weight and the actual weight by the calculation unit, and the control device may include a supply device operation control unit for controlling an operation of the bar-like food item supply device according to the changed calculation result.

The forming device may include a bar-like food item supply device which includes a transferring device for transferring a sheet-like outer material, an inner material supply device for supplying an inner material onto the transferred outer material, and a curling device for curling up the outer material from its one side in a width direction around the inner material.

Further, the present invention is directed to a forming method for forming a bar-like food item into a food product according to claim 1. The method includes supplying the bar-like food item downwardly by a supply device, cutting the bar-like food item by a vertically movable shutter device having , a plurality of shutter pieces capable of opening and closing, and controlling a vertically uppermost position of a support member for supporting the food product from its lower side based on an input parameter input into an input unit of a control device.

The input parameter is a value based on a target weight of the food product and a thickness of the shutter piece.

A storage unit of the control device may store an initial setting parameter including a vertical-movement model pattern of the support member, calculate the uppermost position based on the vertical-movement model pattern and the input parameter, and control the vertical-movement of the support member according to a vertical-movement pattern calculated by a calculation unit based on the uppermost position.

The storage unit may store the initial setting parameter including a maximum vertical stroke of the support member, and the calculation unit may use the maximum vertical stroke as a threshold, calculate the lowermost position of the support member as a lowest vertical-movement position when the uppermost position does not exceed the threshold, calculate the lowermost position as a position lowered from the uppermost position by the maximum vertical stroke when the uppermost position exceeds the threshold, and control the vertical-movement of the support member.

The control device may include an operation control unit which controls operations of the shutter device and the support device based on a calculation result calculated at the calculation unit.

The control device may include a memory unit which can store the initial setting parameter, the input parameter, and the calculation result as one memory group, and read out the stored memory group.

The forming device may include a bar-like food item supply device which includes an inner material supply device, an outer material supply device, and a combining nozzle, the control device may include a supply device operation control unit, a supply amount of the bar-like food item supply device may be calculated by the calculation unit based on a target weight of the food product input into the input unit, the supply amount is calculated to be changed in response to a difference between the target weight and an actual weight of the food product by the calculation unit based on the actual weight input into the input unit, and the supply device operation control unit may controls an operation of the bar-like food item supply device according to the changed calculation result.

### EFFECTS OF THE INVENTION

According to the present invention, setting of the forming device can be automatically changed in response to a change in a weight of the food product, when a bar-like food item is cut to form the food product, or when a periphery of a thin-piece outer material is sealed above an inner material after the inner material has been disposed on an upper surface of the thin-piece outer material to form the food product, so that the weight of the food product can be easily changed while a good appearance and a good shape of the food product are maintained. Further, since the setting can be easily changed, a burden on an operator can be decreased and a production efficiency can be enhanced.

### BRIEF DESCRIPTION OF THE DRAWINGS

Fig. 1 is a schematic front view of a forming device according to a first embodiment of the present invention.
Fig. 2 is a schematic side view of the forming device according to the first embodiment of the present invention.
Fig. 3 is a functional block diagram showing elements of a control device of the forming device according to the first embodiment of the present invention.
Fig. 4 is a schematic graph showing a relationship between a target weight of a food product and an uppermost position of a support member according to the first embodiment of the present invention.
Fig. 5 is a schematic time chart showing an operation of the forming device according to the first embodiment of the present invention.
Fig. 6 is a schematic time chart showing another operation of the forming device according to the first embodiment of the present invention.
Fig. 7 is a schematic front view of a forming device according to a first alternative of the first embodiment of the present invention.
Fig. 8 is a schematic front view of a forming device according to a second alternative of the first embodiment of the present invention.

### DESCRIPTION OF EMBODIMENTS

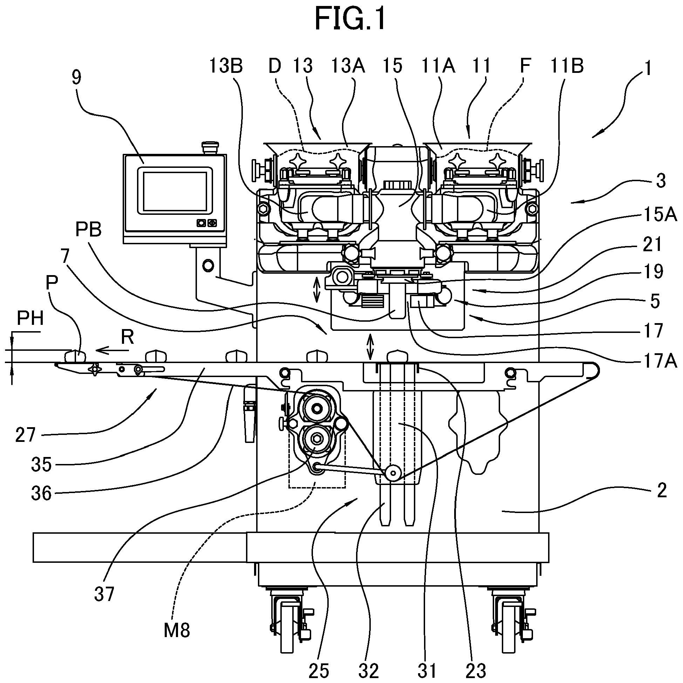

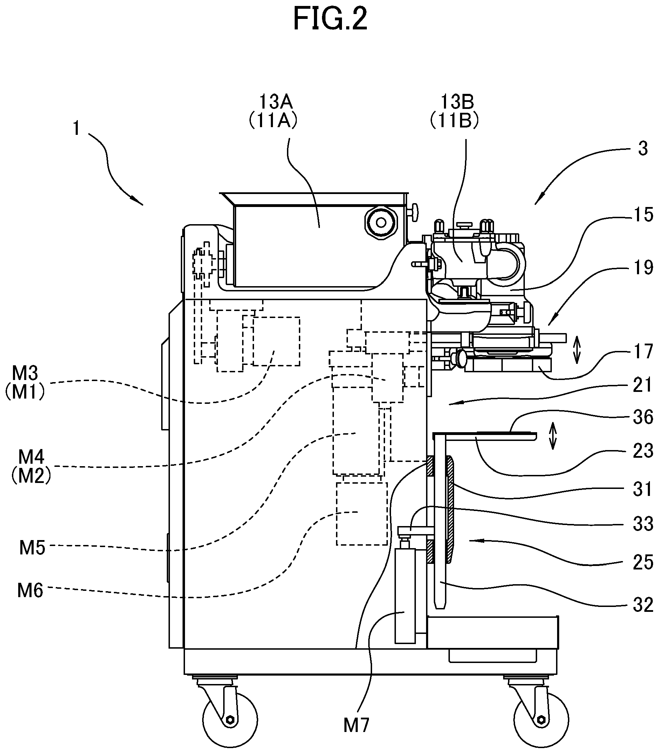

Referring to Figs. 1 to 6, a forming device 1 according to a first embodiment of the present invention will be explained. The forming device 1 will be explained as a device for cutting a bar-like food item, which includes an outer material D surrounding a periphery of an inner material F, to form a food product (an encrusted food product) P. The forming device 1 includes a box-shaped frame 2, a supply device 3, a shutter device 5, a support device 7, and a control device 9.

The supply device 3 includes a supply device 11 for the inner material F and a supply device 13 for the outer material D which are disposed at an upper portion of the frame 2, and a combining nozzle 15 disposed at an upper front portion (on the near side in Fig. 1) of the frame 2. The combining nozzle 15 includes a nozzle 15A for supplying the bar-like food item PB downwardly with the periphery of the inner material F surrounded by the outer material D. The supply device 11 for the inner material F includes a hopper 11A, a screw (not shown) rotatably disposed at an inside bottom of the hopper 11A, a pump 11B, a screw driving motor M1 for driving the screw, and a pump driving motor M2 for driving the pump 11B. The supply device 13 for the outer material D includes a hopper 13A, a screw (not shown) rotatably disposed at an inside bottom of the hopper 13A, a pump 13B, a screw driving motor M3 for driving the screw, and a pump driving motor M4 for driving the pump 13B. Since a structure of the supply device 3 is already known, a detailed explanation of the supply device 3 will be omitted.

The shutter device 5 is disposed below the combining nozzle 15, and configured to drive a plurality of shutter pieces 17 to be opened and closed and to be vertically moved, and cut the bar-like food item PB supplied downwardly from the combining nozzle 15 to form a food product P. The shutter device 5 includes a driving mechanism 19 for the opening/closing actions and a driving mechanism 21 for the vertical movement action. The driving mechanism 19 for the opening/closing actions is configured to perform opening/ closing the shutter pieces 17 which are annularly arranged, by driving a control motor M5 for the opening/closing actions, such as a servomotor, to open and close an opening 17A defined by the plurality of shutter pieces 17 to cut the bar-like food item PB to form the food product P. The driving mechanism 21 for the vertical action includes a control motor M6 for the vertical action, such as a servomotor, and a crank mechanism, and is configured to vertically move (vertically reciprocate) the plurality of shutter pieces 17 and the driving mechanism 19 for the opening/closing actions by rotating the control motor M6 for the vertical action in a fixed direction via the crank mechanism. A sensor (not shown), such as a proximity sensor, is disposed at an output shaft of the control motor M6 for the vertical action to detect that the shutter device 5 is present at the uppermost position of the vertically reciprocating action. Since a structure of the shutter device 5 is already known, a detailed explanation of the shutter device 6 will be omitted.

The support device 7 is disposed below the shutter device 5 and includes a support member 23 supporting the food product P from its lower side, which food product P is cut from the bar-like food item PB, a support-member vertical-movement mechanism 25 for vertically moving (vertically reciprocating) the support member 23, a transferring conveyor 27, an electric control actuator M7, such as a servo motor, and a motor M8 for driving a conveyor belt.

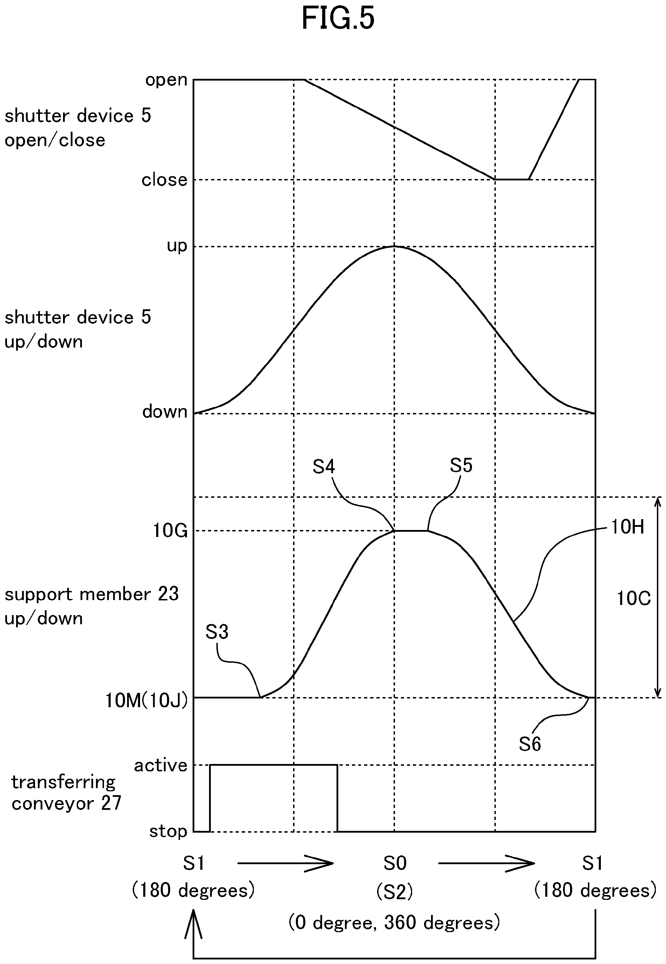

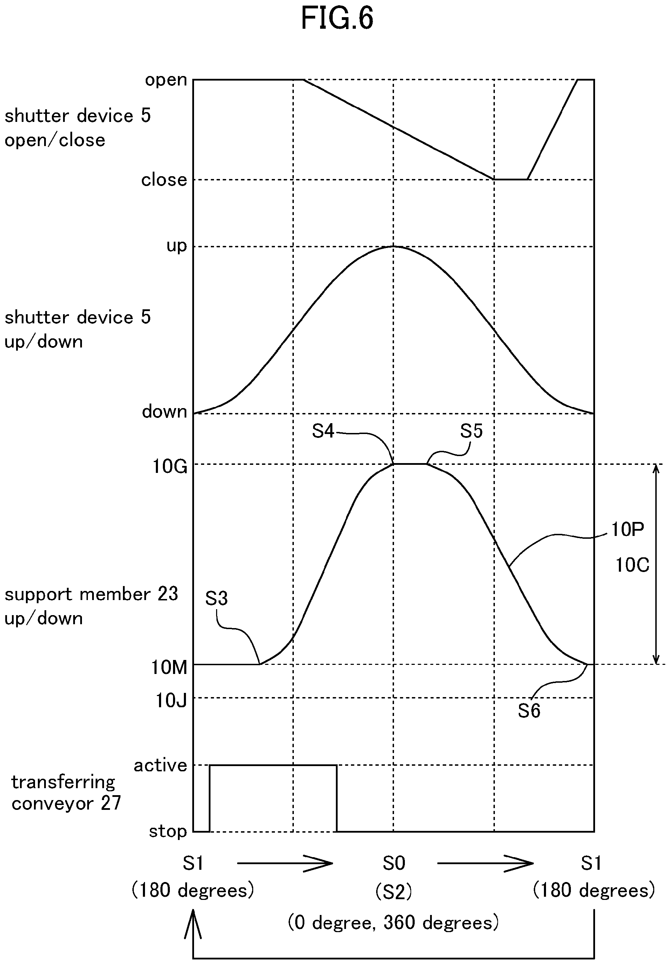

The support-member vertical-movement mechanism 25 includes a bearing 31 disposed at a lower front side of the frame 2, two cylindrical shafts 32 supported by the bearing 31 to be vertically moved, and a flange 33 attached to a tip of a shaft of the electric control actuator M7. The two shafts 32 are arranged so that axes of the two shafts 32 are vertically arranged parallel to each other, an upper end of the shaft 32 is connected to the support member 23, and a side of the shaft 32 about the middle of the shaft 32 is connected to the flange 33. Thus, the flange 33, the two shafts 32, and the support member 23 are integrally and vertically reciprocated by driving the electric control actuator M7 to extend and retract a shaft of the actuator M7. A position of the support member 23 when the shaft of the electric control actuator M7 is most retracted, namely, the lowest structural position of the support member 23 of the support device 7 (the position of the support member 23 shown in Fig. 1) is referred to as a "lowest vertical-movement position 10J" (see Figs. 5 and 6).

The transferring conveyor 27 includes a conveyor plate 35, a conveyor belt 36, and a drive pulley 37. The conveyor plate 35 is attached to two shafts extending from the frame 2 to the front side. The conveyor belt 36 is wound around the conveyor plate 35, the drive pulley 37 and the support member 23. Thus, with the vertical reciprocating action of the support member 23, a portion of the conveyor belt 36 located on the support member 23 (or located below the shutter device 5) is also vertically reciprocated. Namely, the support member 23 supports the food product P from its lower side via the conveyor belt 36. The conveyor belt driving motor M8 is configured to drive the conveyor belt 36 via the drive pulley 37. The conveyor belt 36 is configured to transfer the formed food product P in a transferring direction R.

The control device 9 is configured to drive the control motor M5 for opening and closing the shutter device 5, the electric control actuator M7 for the support device 7, and the motor M8 for driving the conveyor belt of the transferring conveyor 27 in synchronization with the rotation of the control motor M6 for raising and lowering the shutter device 5.

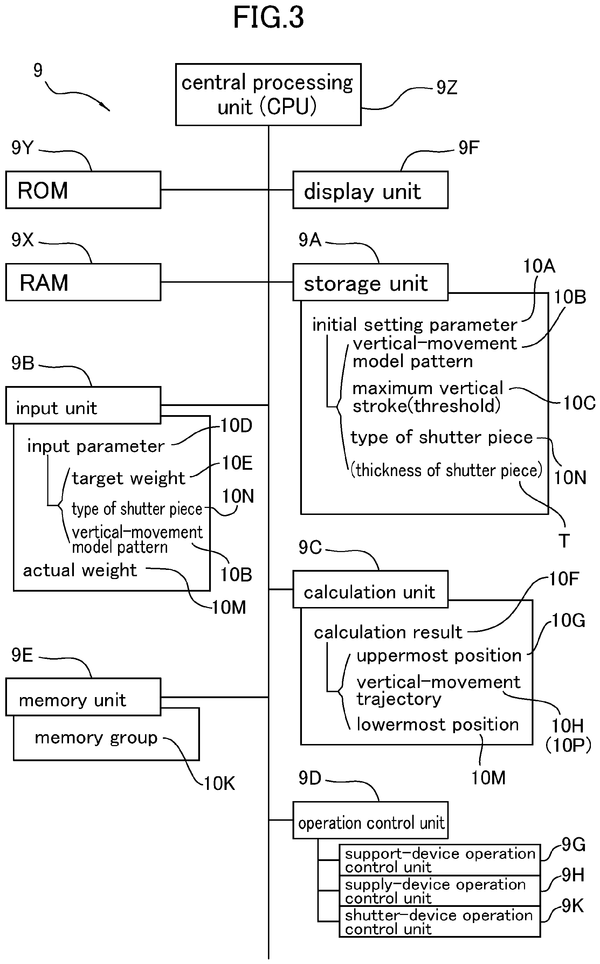

The control device 9 also includes a computer etc., specifically, a central processing unit (CPU) 9Z, a ROM 9Y, a RAM 9X, a storage unit (means) 9A, an input unit (means) 9B, a calculation unit (means) 9C, an operation control unit 9D, a memory unit (means) 9E, and a display unit (means) 9F etc., as shown in Fig. 3.

In the present description, as shown in Fig. 5 etc., one cycle of a cutting process is explained as 360 degrees. The shutter device 5 is present in the uppermost position (sensing position of the sensor) at the 0 degree or a start timing S0 before the shutter device 5 starts lowering, is present in the lowermost position at a timing progressing from the start timing S0 by 180 degrees before the shutter device 5 raises, and is present in the uppermost position again at an end timing S2 progressing from the start timing S0 by 360 degrees. Namely, the start timing S0 and the end timing S2 are the same timing in one cycle.

The storage unit 9A is configured to store an initial setting parameter (items) 10A. The initial setting parameters 10A include a plurality of vertical-movement model patterns 10B for the support member 23, a predetermined maximum vertical stroke 10C for the support member 23, and thicknesses T of the shutter pieces which thicknesses are determined according to a type 10N of the shutter piece 17.

Each of the vertical-movement model patterns 10B includes a raising start timing S3, a raising end timing S4, a lowering start timing S5, a lowering end timing S6 for the support member 23 in one cycle of the cutting process, and arithmetic equations of moving trajectories of the support member 23 at the raising and lowering periods. The moving trajectories of the support member 23 during the raising and lowering periods calculated based on the arithmetic equations of the moving trajectories may be straight lines, sine curves, logarithmic curves etc. or combination thereof. The storage unit 9A stores a plurality of vertical-movement model patterns 10B, and one of the plurality of vertical-movement model patterns 10B may be selected according to a property, an appearance, and a shape of the food product.

The maximum vertical stroke 10C may be stored for each of the plurality of vertical-movement model patterns 10B or may be common to the plurality of vertical-movement model patterns 10B. As explained later, the maximum vertical stroke 10C is used as a threshold.

The storage unit 9A stores a plurality of types 10N of the shutter pieces 17, and the thickness T of each type 10N of the shutter pieces 17.

The input unit 9B is, for example, a touch panel, and is configured to input an input parameter (value) 10D. The input parameters 10D include a target weight 10E of the food product P, the type 10N of the selective shutter pieces 17, and the vertical-movement model pattern 10B. The thickness T of the shutter pieces 17 is determined by selecting the type 10N of the shutter pieces 17.

The calculation unit 9C is configured to calculate an uppermost position 10G, a vertical trajectory (vertical-movement pattern) 10H, 10P, and a lowermost position 10M of the support member 23, which are calculation results 10F, by using the initial setting parameters 10A and the input parameters 10D.

The operation control unit 9D includes a support device operation control unit (means) 9G for controlling the operation of the electric control actuator M7 which vertically reciprocates the support member 23 of the support device 7 based on the calculation results 10F calculated by the calculation unit 9C, a supply device operation control unit (means) 9H for controlling the operation of the supply device 3, and a shutter device operation control unit (means) 9K for controlling the operation of the shutter device 5.

The memory unit (means) 9E stores the initial setting parameters 10A, the input parameters 10D, and the calculation results 10F as one memory group 10K. The data of the memory group 10K can be read out if necessary.

The display unit 9F displays the initial setting parameters 10A, the input parameters 10D, the calculation results 10F etc., and is, for example, a liquid crystal panel.

In the forming device 1 configured as explained above, the bar-like food item PB is supplied from the supply device 3 downwardly through the shutter device 5 and is supported from its lower side onto the support member 23, the shutter device 5 is capable of vertically moving and including the shutter pieces 17 capable of opening and closing, the support member 23 is capable of vertically moving, and the bar-like food item PB is cut to form the food product P by closing the shutter pieces 17.

A control method of the forming device 1 will be explained.

An operator uses the input unit 9B to select one of the plurality of vertical-movement model patterns 10B and one of the types 10N of the plurality of shutter pieces 17 stored in the storage unit 9A. The operator further uses the input unit 9B to input the target weight 10E of the food product P to be formed.

The calculation unit 9C calculates the uppermost position 10G of the support member 23 by using the thickness T of the shutter piece corresponding to the type 10N of the selected shutter piece 17, and the target weight 10E of the food product P, as follows.

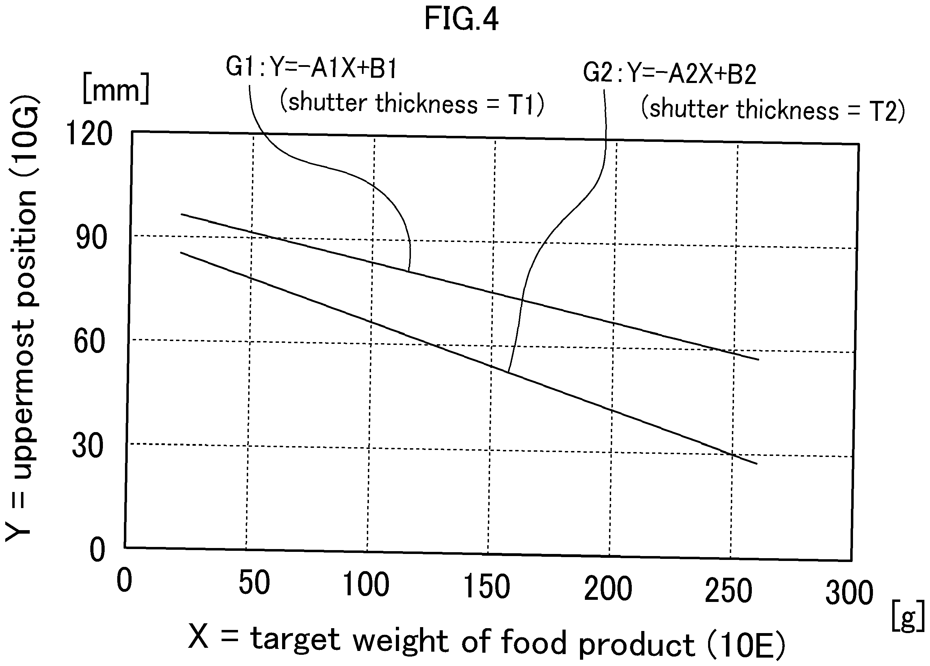

As shown in Fig. 4, a relationship between the target weight 10E and the uppermost position 10G of the support member 23 (corresponding to the forming height PH of the food product P) is considered to be a linear function. In the present embodiment, a case in which there are two types T1, T2 (T1<T2) of the thickness T of the shutter piece 17 will be explained. In another embodiment, the relationship between the target weight 10E and the uppermost position 10G of the support member 23 may be a quadratic function etc., and there may be three or more types of thickness T of the shutter piece 17.

When the shutter thickness is T1, a relationship between X and Y is that shown in a graph G1 in Fig. 4, wherein a variable X is the target weight 10E and a variable Y represents the uppermost position 10G of the support member 23. Namely, an arithmetic equation is Y = -A1 X +B1. When the shutter thickness is T2, a relationship between X and Y is that shown in a graph G2 in Fig. 4, wherein a variable X is the target weight 10E, and a variable Y is the uppermost position 10G of the support member 23. Namely, an arithmetic equation is Y = -A2 X +B2. In the above equations, each of the constants A1, A2, B1, B2 is determined, depending on properties of the food product, and the constants B1, B2 have a relationship of B1>B2. The calculation unit 9C puts the target weight 10E into one of the arithmetic equations corresponding to the shutter thickness T, and calculates the uppermost position 10G.

Thus, in response to a change in the weight of the food product, the food product can be easily formed to have a good appearance and a good shape, and thus, a burden on an operator can be decreased and a production efficiency can be enhanced.

Next, the calculation unit 9C determines the lowermost position 10M and the vertical-movement trajectories 10H, 10P of the support member 23. In the present explanation, the Y coordinate of the lowest vertical-movement position 10J is set as 0 mm (0 point).

When the vertical-movement trajectories 10H, 10P of the support member 23 are determined, if the uppermost position 10G is relatively high, a time period of vertically moving the support member 23 between the uppermost position 10G and the lowest vertical-movement position 10J would be relatively long so that the production efficiency may be decreased. In particular, when the thickness T of the shutter piece 17 is thin and the target weight 10E of the food product is small, the uppermost position 10G becomes higher and the production efficiency becomes decreased. In such a case, it is preferable that the maximum vertical stroke 10C of the vertical-movement of the support member 23 is previously determined and set as a threshold, a distance between the uppermost position 10G and the lowest vertical-movement position 10J is compared with the threshold, and the lowermost position 10M of the support member 23 is determined in accordance with the result of the comparison.

Firstly, when the uppermost position 10G is relatively low, namely, when the distance between the uppermost position 10G and the lowest vertical-movement position 10J does not exceed the threshold (or is smaller than the maximum vertical stroke 10C), the calculation unit 9C determines the lowermost position 10M of the support member 23 as the lowest vertical-movement position 10J. For example, when the maximum vertical stroke 10C is 60 mm and the uppermost position 10G is 50 mm, the lowermost position 10M is determined as 0 mm, namely, the lowest vertical-movement position 10J (0 point). The calculation unit 9C subsequently determines the vertical-movement trajectory 10H of the support member 23 by applying the uppermost position 10G and the lowermost position 10M to the vertical-movement model pattern 10B (especially, a moving trajectory arithmetic equation) (see Fig. 5).

Next, when the uppermost position 10G is relatively high, namely, when the distance between the uppermost position 10G and the lowest vertical-movement position 10J exceeds the threshold (or is larger than the maximum vertical stroke 10C), the calculation unit 9C determines the lowermost position 10M of the support member 23 as a position which is lower than the uppermost position 10G by the maximum vertical stroke 10C. For example, when the maximum vertical stroke 10C is 60 mm and the uppermost position 10G is 70 mm, the lowermost position 10M is determined as a position which is higher than the lowest vertical-movement position 10J (0 point) by 10 mm. In this case, the vertical stroke of the support member 23 corresponds to the maximum vertical stroke 10C. The calculation unit 9C subsequently determines the vertical-movement trajectory 10P of the support member 23 by applying the uppermost position 10G and the lowermost position 10M to the vertical-movement model pattern 10B (especially, a moving trajectory arithmetic equation) (see Fig. 6).

As a result, when the distance between the uppermost position 10G and the lowest vertical-movement position 10J is larger than the maximum vertical stroke 10C (or exceeds the threshold), the vertical stroke of the support member 23 is restricted to or does not exceed the maximum vertical stroke 10C. By doing so, it is possible to avoid a decrease in the production efficiency. Further, it is possible to prevent the food product P on the conveyor belt 36 from falling or dropping out due to excess vertical stroke of the support member 23 and large vertical swing of the conveyor belt 36.

The shutter device operation control unit 9K of the operation control unit 9D controls the operations of the shutter device 5. The support device operation control unit 9G also controls the operation of the electric control actuator M7 for vertically moving the support member 23 according to the vertical-movement trajectories 10H, 10P which are finally determined. Further, after the cutting action for the food product P is completed and the support member 23 is lowered to the lowest position, the operation control unit 9D allows the food product P to be transferred in the transferring direction R by driving the conveyor belt driving motor M8 to drive the conveyor belt 36.

Further, the calculation unit 9C of the control device 9 calculates and sets the supply amount of the supply device 3, specifically, the rotational speeds (supply rates) of the screw driving motor M1 and the pump driving motor M2 of the inner material supply device, and the rotational speeds (supply rates) of the screw driving motor M3 and the pump driving motor M4 of the outer material supply device 13, based on the target weight 10E of the food product P input to the input unit 9B. The supply device operation control unit 9H controls and drives each of the motors M 1 to M4 of the supply device 3 according to the set rotational speed. After that, the operator measures the actual weight 10L of the food product P and manually inputs it to an input location for the actual weight 10L of the input unit 9B. The actual weight 10L may be automatically measured and automatically input to the input unit 9B. Then, the calculation unit 9C calculates the difference between the target weight 10E and the actual weight 10L, and calculates and resets the rotational speed of each of the motors M1 to M4 so that the actual weight 10L comes close to the target weight 10E. The supply device operation control unit 9H controls and drives each of the motors M1 to M4 of the supply device 3 according to the reset rotational speed. Thus, the operation of the operator for adjusting the actual weight of the food product P to the target weight can be made easy and the burden on the operator (worker) can be reduced.

The display unit 9F displays the input parameters 10D, the calculation results 10F etc. The memory unit 9E can store the input parameters 10D, the calculation results 10F etc. as one group 10K, and the control device 9 may read out the one group 10K and use the input parameters 10D, the calculation results 10F etc. contained in the one group 10K, if necessary. The one group 10K preferably includes the target weight of the food product, the thickness of the shutter piece 17, the maximum stroke of the support member 23, the selected vertical model pattern 10B, and the vertical-movement trajectories 10H, 10P.

By performing the above-stated control, the weight of the food product P allows to be easily changed while a good appearance and a good shape of the food product P are maintained, so that the burden on the operator (worker) can be reduced.

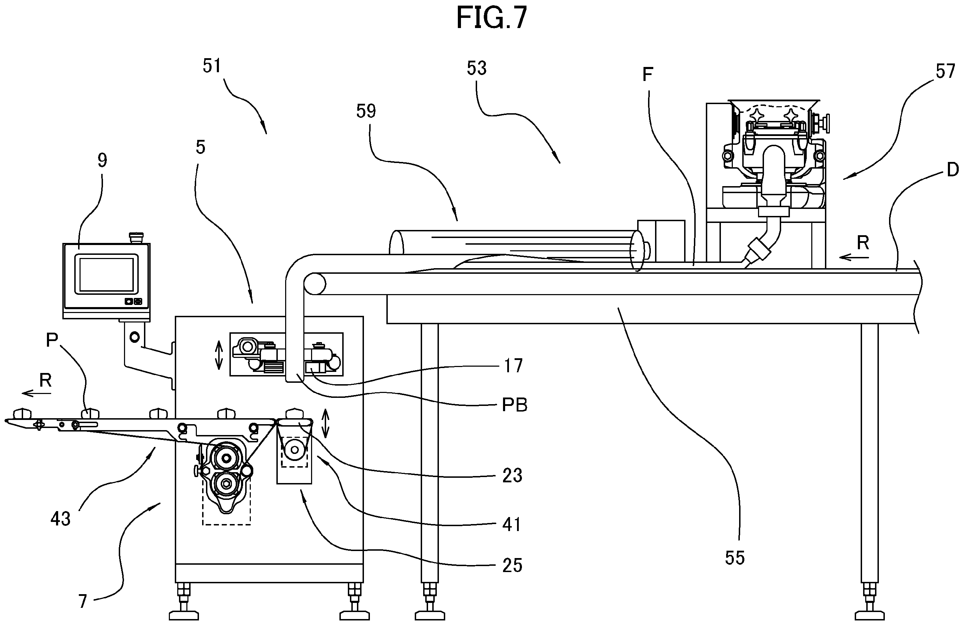

The forming device 1 according to the first embodiment of the present invention has been explained, and then, referring to Fig. 7, a forming device 51 according to a first alternative will be explained, in which alternative, the supply device 3 of the forming device 1 is replaced with another supply device 53. Like the forming device 1, the forming device 51 is a device by which a food product P is formed, and specifically, such a food product P is an encrusted food product with the outer material D covering around a periphery of the inner material F. In this explanation, the same reference numerals as those in the forming device 1 according to the first embodiment are given to the components which have functions similar to those in the forming device 1, and thus, their overlapping explanations are omitted. The forming device 51 includes a supply device 53, the shutter device 5, the support device 7, and the control device 9.

The supply device 53 includes a transferring conveyor 55 for transferring a sheet-like outer material D in the transferring direction R, an inner material supply device 57 disposed above the transferring conveyor 55 and supplying an inner material F onto the outer material D, and a curling device 59 disposed downstream of the inner material supply device 57 and curling the outer material from its one side by using the inner material as a core material. Then, a bar-like food item PB in which the outer material D covers the periphery of the inner material F is supplied from a downstream end of the transferring conveyor 55 downwardly. The shutter device 5 is disposed below the downstream end of the transferring conveyor 55, and the support device 7 is disposed below the shutter device 5. The support device 7 includes two conveyors arranged in series, namely, a conveyor 41 disposed below the shutter device 5, and a transferring conveyor 43 disposed downstream of the conveyor 41. The support member 23 is defined by a conveyor plate of the conveyor 41. The conveyor 41 (or the support member 23) is configured to be vertically reciprocated by the support member vertical-movement mechanism 25.

Also in the forming device 51 according to the first alternative, similar to the forming device 1 according to the first embodiment, the weight of the food product P can be easily changed while a good appearance and a good shape of the food product P are maintained by controlling the vertical movement of the support member 23 through the support member vertical mechanism 25 by the control device 9, so that the burden on the operator (worker) can be reduced.

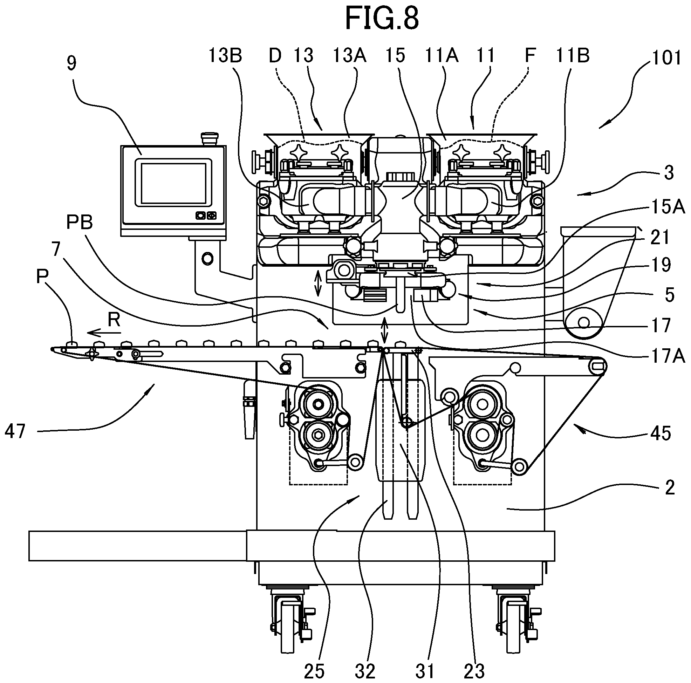

Next, referring to Fig. 8, a forming device 101 according to a second alternative will be explained, in which second alternative, the support device 7 in the forming device 1 is replaced with two conveyors which are continuous in the transferring direction R. In this explanation, the same reference numerals as those in the forming device 1 according to the first embodiment are given to components which have the same functions as those in the forming device 1, and their overlapping explanations are omitted. The forming device 101 includes the supply device 3, the shutter device 5, the support device 7, and the control device 9 as the forming device 1 includes.

The support device 7 includes two conveyors arranged in series, namely, a conveyor 45 disposed below the shutter device 5 and a transferring conveyor 47 disposed downstream of the conveyor 45, a support member 23 for supporting the food product P from the bottom side, which food product is cut from the bar-like food item PB, and a support member vertical-movement mechanism 25 etc., for vertically moving (vertically reciprocating) the support member 23. The conveyor belt of the conveyor 45 is wound around the support member 23, and a portion of the conveyor belt which is positioned on the support member 23 is vertically reciprocated along with the vertical reciprocation of the support member 23.

Also in the forming device 101 according to the second alternative, similar to the forming device 1 according to the first embodiment, the weight of the food product P can be easily changed while a good appearance and a good shape of the food product are maintained by controlling the vertical movement of the support member 23 through the support member vertical mechanism 25 by the control device 9, so that the burden on the operator (worker) can be reduced.

Explanation of the forming device according to the embodiments of the present invention has been generally done as described above, but the present invention is not limited to the embodiments and it is needless to say that various modifications can be made as long as they fall within the scope of the appended claims.

In the above-explained forming device, the vertical-movement of the support member 23 is controlled according to the calculated vertical-movement trajectories 10H, 10P, but after the vertical-movement trajectory of the support member 23 is calculated, the vertical-movement trajectory may be changed and adjusted by inputting different parameters into the input unit 9B during a production process.

Further, the vertical-movement trajectory 10H, 10P of the support member 23 shown in Fig. 5 or 6 may be adjusted so that as the vertical-movement trajectory is moved in a lateral direction shown in Fig. 5 or Fig. 6 (or its phase is shifted) with respect to the upper end position (start timing S0) of the shutter device 5.

In the above-explained embodiment, the food product P is explained as an encrusted food product which is made by cutting and encrusting a bar-like food item with the outer material D covering the periphery of the inner material F, but the food product P may be one made by cutting a bar-like food item consisting only of the outer material D. Also in such a food product, the target weight of the food product can be easily changed while a good appearance and a good shape of the food product are maintained.

In the above-explained embodiment, the forming device is explained as one for cutting a bar-like food item into a food product, but it may be one for forming a food product by disposing an inner material on an upper surface of a thin-piece outer material and then sealing a peripheral edge of the thin-piece outer material above the inner material. In this case, the supply device in the forming device 1 according to the above-explained embodiment is changed (refer to the Patent Publication 4 indicated above), and the shutter device is used as a sealing device for sealing a thin-piece outer material with a plurality of shutter pieces, which outer material has an upper surface on which an inner material has been disposed. Also in this forming device, the target weight of the food product can be easily changed while a good appearance and a good shape of the food product are maintained.

In the above-explained embodiment, the support device is explained as a conveyor, but the support device is not limited to such a conveyor and may be a support device with a mechanism (for example, a robot arm) for vertically and horizontally moving a tray supporting member supporting a tray below the shutter device.

In the above-explained embodiment, the operation of the forming device is controlled based on the calculation results, but the calculation results may be displayed, and the setting of the device may be manually changed. Even in this case, it is sufficient to input the calculation results into the input unit as they are displayed on the display unit, so that the operation efficiency can be enhanced more than before.

1, 51, 101: forming device (for an encrusted food product)
3, 53: supply device
5: shutter device
7: support device
9: control device
17: shutter piece
23: support member
9A: storage unit
9B: input unit
9C: calculation unit
9D: operation control unit
10A initial setting parameter
10B: vertical-movement model pattern
10D: input parameter
10F: calculation result
10G: uppermost position (of the support member 23)
10H: vertical-movement trajectory
10P: vertical-movement trajectory
D: outer material
F: inner material
P: food product
PB: bar-like food item

## Claims

1. A method of forming a food product (P) comprising:
supplying a bar-like food item (PB) or a thin-piece outer material from a supply device (3, 53) downwardly through a shutter device (5) onto a support member (23), the outer material having an upper surface onto which an inner material has been disposed, the shutter device (5) including a plurality of shutter pieces (17) capable of opening and closing, the shutter device (5) and the support member (23) being vertically movable,
supporting the bar-like food item (PB) or the outer material (D) from its lower side by the support member (23), and
closing the plurality of shutter pieces (17) to cut the bar-like food item (PB), or to seal a periphery of the outer material above the inner material,
**characterized in that** an uppermost position (10G) of the support member (23) is calculated based on a target weight (10E) of the food product (P) and a thickness (T) of the shutter piece (17) to determine a vertical-movement trajectory (10H) of the support member (23).

2. The method according to claim 1,
wherein the support member (23) has a structural lowest vertical-movement position (10J),
wherein when a distance between the uppermost position (10G) and the structural lowest vertical-movement position (10J) of the support member (23) does not exceed a set maximum vertical stroke (10C), the lowermost position (10M) of the support member (23) is determined to be the structural lowest vertical-movement position (10J), and the support member (23) is vertically moved between the uppermost position (10G) and the lowermost position (10M), and
when the distance between the uppermost position (10G) and the structural lowest vertical-movement position (10J) of the support member (23) exceeds the set maximum vertical stroke (10C), the lowermost position (10M) of the support member (23) is determined to be a position lowered from the uppermost position (10G) by the maximum vertical stroke (10C), and the support member (23) is vertically moved between the uppermost position (10G) and the lowermost position (10M).

3. The method according to claim 2, further comprising;
selecting a vertical-movement model pattern (10B) of the support member (23), and fitting the vertical-movement model pattern (10B) with the uppermost position (10G) and the lowermost position (10M) of the support member (23) to determine the vertical-movement trajectory (10P) of the support member (23).

4. The method according to claim 3,
wherein the target weight (10E) of the food product (P), the thickness (T) of the shutter piece(17), the maximum stroke (10C) of the support member (23), the selected vertical-movement model pattern (10B), and the vertical-movement trajectory (10H) are readably stored as one memory group (10K).

5. The method according to any one of claims 1-4,
wherein the food product (P) is formed by cutting the bar-like food item (PB).

6. The method according to any one of claims 1-4,
wherein the food product (P) is formed by sealing the peripheral of the outer material above the inner material which has been disposed onto the upper surface of the thin-piece outer material.

7. The method according to claim 5, further comprising;
comparing the target weight with an actual weight of the food product (P), and
adjusting a supply amount of the bar-like food item (PB) supplied from the supply device (3) so that the difference between the target weight and the actual weight is reduced.

## Patentansprüche

1. Verfahren zur Bildung eines Lebensmittelprodukts (P), umfassend:
Zuführen eines riegelartigen Lebensmittelprodukts (PB) oder eines dünnen äußeren Materials von einer Zufuhrvorrichtung (3, 53) nach unten durch eine Klappenvorrichtung (5) auf ein Abstützelement (23), wobei das äußere Material eine obere Oberfläche aufweist, auf welcher ein inneres Material angeordnet wurde, wobei die Klappenvorrichtung (5) eine Mehrzahl von Klappenteilen (17) umfasst, die öffenbar und schließbar sind, wobei die Klappenvorrichtung (5) und das Abstützelement (23) vertikal beweglich sind,
Abstützen des riegelartigen Lebensmittelprodukts (PB) oder des äußeren Materials (D) von seiner unteren Seite durch das Abstützelement (23), und
Schließen der Mehrzahl von Klappenteilen (17), um das riegelartige Lebensmittelprodukt (PB) zu schneiden oder um einen Umfang des äußeren Materials über dem inneren Material abzudichten,
**dadurch gekennzeichnet, dass**
eine oberste Position (10G) des Abstützelements (23) basierend auf einem Sollgewicht (10E) des Lebensmittelprodukts (P) und einer Dicke (T) des Klappenteils (17) berechnet wird, um eine Vertikalbewegungsbahn (10H) des Abstützelements (23) zu bestimmen.

2. Verfahren nach Anspruch 1,
wobei das Abstützelement (23) eine strukturelle niedrigste Vertikalbewegungsposition (10J) aufweist,
wobei, wenn ein Abstand zwischen der obersten Position (10G) und der strukturellen niedrigsten Vertikalbewegungsposition (10J) des Abstützelements (23) nicht einen eingestellten maximalen vertikalen Hub (10C) überschreitet, bestimmt wird, dass die unterste Position (10M) des Abstützelements (23) die strukturelle niedrigste Vertikalbewegungsposition (10J) ist, und das Abstützelement (23) vertikal zwischen der obersten Position (10G) und der untersten Position (10M) bewegt wird, und
wenn der Abstand zwischen der obersten Position (10G) und der strukturellen niedrigsten Vertikalbewegungsposition (10J) des Abstützelements (23) den eingestellten maximalen vertikalen Hub (10C) überschreitet, bestimmt wird, dass die unterste Position (10M) des Abstützelements (23) eine von der obersten Position (10G) durch den maximalen vertikalen Hub (10C) abgesenkte Position ist, und das Abstützelement (23) vertikal zwischen der obersten Position (10G) und der untersten Position (10M) bewegt wird.

3. Verfahren nach Anspruch 2, ferner umfassend:
Auswählen eines Vertikalbewegungs-Modellmusters (10B) des Abstützelements (23) und Ausstatten des Vertikalbewegungs-Modellmusters (10B) mit der obersten Position (10G) und der untersten Position (10M) des Abstützelements (23), um die Vertikalbewegungsbahn (10P) des Abstützelements (23) zu bestimmen.

4. Verfahren nach Anspruch 3,
wobei das Sollgewicht (10E) des Lebensmittelprodukts (P), die Dicke (T) des Klappenteils (17), der maximale Hub (10C) des Abstützelements (23), das ausgewählte Vertikalbewegungs-Modellmuster (10B) und die Vertikalbewegungsbahn (10H) als eine Speichergruppe (10K) lesbar gespeichert sind.

5. Verfahren nach einem der Ansprüche 1 bis 4,
wobei das Lebensmittelprodukt (P) durch Schneiden des riegelartigen Lebensmittelprodukts (PB) gebildet wird.

6. Verfahren nach einem der Ansprüche 1 bis 4,
wobei das Lebensmittelprodukt (P) durch Abdichten des Umfangs des äußeren Materials über dem inneren Material gebildet wird, das auf der oberen Oberfläche des dünnen äußeren Materials angeordnet wurde.

7. Verfahren nach Anspruch 5, ferner umfassend:
Vergleichen des Sollgewichts mit einem tatsächlichen Gewicht des Lebensmittelprodukts (P), und
Anpassen einer Zufuhrmenge des riegelartigen Lebensmittelprodukts (PB), das von der Zufuhrvorrichtung (3) zugeführt wird, so dass der Unterschied zwischen dem Sollgewicht und dem tatsächlichen Gewicht verringert wird.

## Revendications

1. Procédé de formation d'un produit alimentaire (P), comprenant:
Acheminement d'un produit alimentaire en forme de barre (PB) ou d'un matériau extérieur mince vers le bas à partir d'un dispositif d'acheminement (3, 53) à travers un dispositif à volet (5) sur un élément de support (23), le matériau extérieur ayant une surface supérieure sur laquelle un matériau intérieur a été placé, le dispositif à volet (5) comprenant une pluralité de parties de volet (17) qui peuvent être ouvertes et fermées, le dispositif à volet (5) et l'élément de support (23) étant mobiles verticalement,
supporter le produit alimentaire en forme de barre (PB) ou le matériau extérieur (D) depuis son côté inférieur par l'élément de support (23), et
fermer la pluralité de parties de volet (17) pour couper le produit alimentaire en forme de barre (PB) ou pour sceller une périphérie du matériau extérieur sur le matériau intérieur,
**caractérisé en ce que** une position la plus haute (10G) de l'élément de support (23) est calculée sur la base d'un poids de consigne (10E) du produit alimentaire (P) et d'une épaisseur (T) de la partie de volet (17) afin de déterminer une trajectoire de déplacement vertical (10H) de l'élément de support (23).

2. Procédé selon la revendication 1,
dans lequel l'élément de support (23) a une position de mouvement vertical structurellement la plus basse (10J),
dans lequel, lorsqu'une distance entre la position la plus haute (10G) et la position de déplacement vertical structurellement la plus basse (10J) de l'élément de support (23) ne dépasse pas une course verticale maximale réglée (10C), il est déterminé que la position la plus basse (10M) de l'élément de support (23) est la position de déplacement vertical structurellement la plus basse (10J), et l'élément de support (23) est déplacé verticalement entre la position la plus haute (10G) et la position la plus basse (10M), et
lorsque la distance entre la position la plus haute (10G) et la position de déplacement vertical structurellement la plus basse (10J) de l'élément de support (23) dépasse la course verticale maximale réglée (10C), il est déterminé que la position la plus basse (10M) de l'élément de support (23) est une position abaissée par rapport à la position la plus haute (10G) par la course verticale maximale (10C), et l'élément de support (23) est déplacé verticalement entre la position la plus haute (10G) et la position la plus basse (10M).

3. Procédé selon la revendication 2, comprenant en outre :
sélectionner un modèle de mouvement vertical (10B) de l'élément de support (23) et munir le modèle de mouvement vertical (10B) de la position la plus haute (10G) et de la position la plus basse (10M) de l'élément de support (23) afin de déterminer la trajectoire de mouvement vertical (10P) de l'élément de support (23) .

4. Procédé selon la revendication 3,
dans lequel le poids de consigne(10E) du produit alimentaire (P), l'épaisseur (T) de la partie de volet (17), la course maximale (10C) de l'élément de support (23), le modèle de mouvement vertical sélectionné (10B) et la trajectoire de mouvement vertical (10H) sont stockés de manière lisible en tant que groupe de mémoire (10K) .

5. Procédé selon l'une quelconque des revendications 1 à 4,
dans lequel le produit alimentaire (P) est formé en coupant le produit alimentaire en forme de barre (PB).

6. Procédé selon l'une quelconque des revendications 1 à 4,
dans lequel le produit alimentaire (P) est formé en scellant la périphérie du matériau externe sur le matériau interne qui a été placé sur la surface supérieure du matériau externe mince.

7. Procédé selon la revendication 5, comprenant en outre :
comparer le poids de consigne à un poids réel du produit alimentaire (P), et
ajuster une quantité d'acheminement du produit alimentaire de type barre (PB) fourni par le dispositif d'acheminement (3) de sorte que la différence entre le poids de consigne et le poids réel soit réduite.
